(19) Europäisches Patentamt
European Patent Office
Office européen des brevets

(11) **EP 2 507 102 B1**

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(21) Anmeldenummer: **10766009.4**

(22) Anmeldetag: **04.10.2010**

(51) Int Cl.:
***B60T 8/36*** *(2006.01)*

(86) Internationale Anmeldenummer:
**PCT/EP2010/064748**

(87) Internationale Veröffentlichungsnummer:
**WO 2011/067012 (09.06.2011 Gazette 2011/23)**

(54) **VERFAHREN ZUR ANSTEUERUNG EINES UMSCHALTVENTILS IN EINEM HYDRAULISCHEN KFZ-BREMSSYSTEM**

METHOD FOR ACTUATING A SWITCHING VALVE IN A HYDRAULIC MOTOR VEHICLE BRAKE SYSTEM

PROCÉDÉ POUR ACTIONNER UNE VALVE DE COMMUTATION DANS UN SYSTÈME DE FREINAGE AUTOMOBILE HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2009 DE 102009047335**

(43) Veröffentlichungstag der Anmeldung:
**10.10.2012 Patentblatt 2012/41**

(73) Patentinhaber: **Robert Bosch GmbH**
**70442 Stuttgart (DE)**

(72) Erfinder:
• **BUNK, Michael**
**Hampton**
**VIC 3188 (AU)**
• **REICHERT, Michael**
**71732 Tamm (DE)**
• **JUNG, Markus**
**74199 Untergruppenbach (DE)**
• **SCHANZENBACH, Matthias**
**74246 Eberstadt (DE)**

(56) Entgegenhaltungen:
**EP-A2- 2 008 896       DE-A1- 10 200 771**
**DE-A1- 10 238 217**

**Beschreibung**

Stand der Technik

Die Erfindung betrifft ein Verfahren zum Ansteuern eines Ventils gemäß dem Oberbegriff des Patentanspruchs 1.

Moderne Bremssysteme, die für eine Fahrdynamikregelung ausgelegt sind, haben üblicherweise mehrere Ventile, mit deren Hilfe der Druckaufbau oder -abbau in den Radbremsen situationsabhängig gesteuert werden kann.

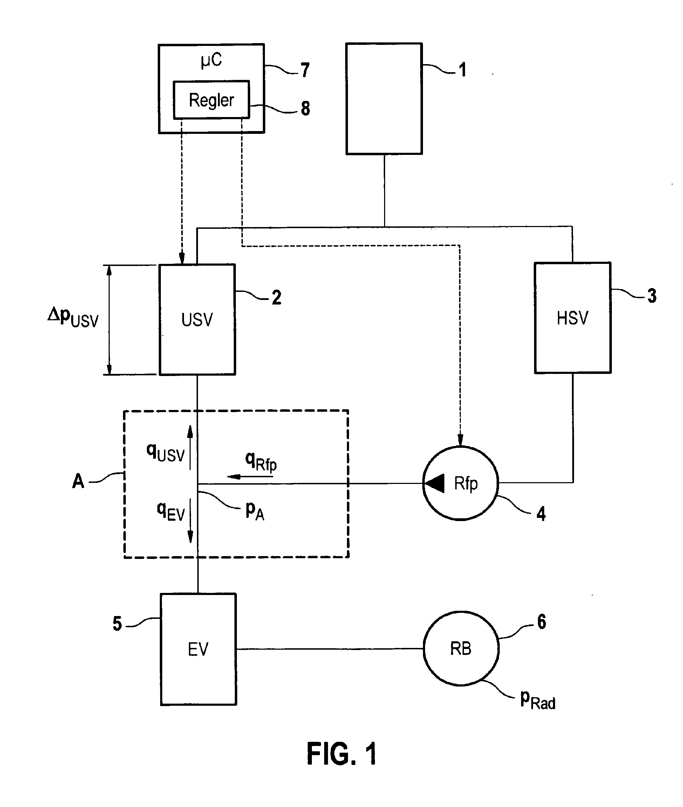

Fig. 1 zeigt den für die Erfindung wesentlichen Teil eines aus dem Stand der Technik bekannten hydraulischen Bremssystems, das zur Durchführung einer Fahrdynamikregelung eingerichtet ist. Der dargestellte Teil des Bremssystems umfasst einen Hauptbremszylinder 1 mit einem Fluidreservoir, ein Umschaltventil (USV) 2, das im Normalzustand geöffnet ist (normally-open), ein Schaltventil (HSV) 3, das im Normalzustand geschlossen ist (normallyclosed), eine Hydraulikpumpe (RFP) 4, ein Einlassventil (EV) 5, sowie eine am Rad angeordnete Radbremse (RB) 6. Eine vom Hauptbremszylinder 1 abgehende Bremsleitung verzweigt zum USV 2 und zum HSV 3. Die Hydraulikpumpe ist dem HSV 3 nachgeordnet und kann bei geöffnetem HSV 3 Bremsflüssigkeit über das Einlassventil 5 zu den Radbremsen 6 fördern. Der Bereich A kennzeichnet einen Teilkreis zwischen USV 2, Hydraulikpumpe 4 und EV 5.

Im stabilen Fahrzustand des Fahrzeugs (Normalzustand) ist die Hydraulikpumpe 4 nicht aktiv. Das USV 2 ist geöffnet und das HSV 3 geschlossen. Durch Betätigung eines Fuß-Bremspedals (nicht gezeigt), wird vom Hauptbremszylinder 1 über der USV 2 und das EV 5 Bremsdruck an der Radbremse 6 aufgebaut.

In einer kritischen Fahrsituation greift ein Regler 8 in den Fahrbetrieb ein. In diesem Fall werden die Hydraulikpumpe 4 vom Steuergerät 7 angesteuert, das USV 2 geschlossen und das HSV 3 geöffnet. Die Hydraulikpumpe 4 pumpt dann Hydraulikfluid aus dem Reservoir über das Einlassventil 5 in die Radbremse 6 und baut automatisch Bremsdruck auf. Der Regler 8 gibt hierzu einen Solldruckverlauf vor.

Nach dem derzeitigen Stand der Technik werden für die Regelung des Drucks in den Radbremsen zwei verschiedene Verfahren eingesetzt, die im Folgenden kurz erläutert werden:

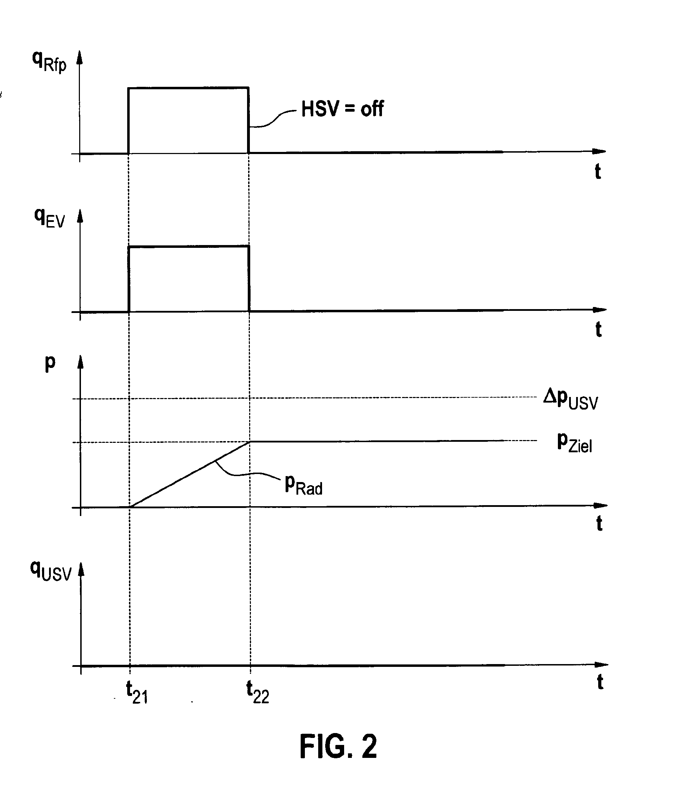

Beim ersten Verfahren (Saugregelung) ist das HSV 3 während des gesamten Druckaufbaus geöffnet und das USV 2 geschlossen. Fig. 2 zeigt den prinzipiellen Verlauf der Volumenströme $q_{Rfp}$, $q_{USV}$, $q_{EV}$ an der Hydraulikpumpe 4 und an den Ventilen USV 2 und EV 3, sowie den Verlauf des Drucks $p_{Rad}$ in der Radbremse. Mit Einschalten der Hydraulikpumpe 4, gleichzeitigem Öffnen des Ventils 3 und Schließen des Ventils 2 zum Zeitpunkt $t_{21}$ wird der gesamte durch die Pumpe 4 erzeugte Volumenstrom über das Ventil 5 zu den Radbremsen 6 geleitet. Sobald ein Zieldruck $p_{Ziel}$ erreicht ist, wird das HSV 3 im Zeitpunkt $t_{22}$ geschlossen. Die Hydraulikpumpe 4 läuft weiter, kann aber kein Fluid mehr ansaugen, so dass der Volumenstrom $q_{Rfp}$ an der Hydraulikpumpe 4 und der Volumenstrom $q_{EV}$ am Einlassventil zu Null werden. Das USV 2 ist während der ganzen Zeit vollständig geschlossen. Der Volumenstrom $q_{USV}$ am USV 2 ist somit Null.

Dieses Verfahren hat den Vorteil, dass das gesamte von der Pumpe 4 geförderte Bremsflüssigkeits-Volumen in die Radbremse strömt und damit eine maximale Dynamik des Druckaufbaus in der Bremse erreicht wird. Ein Nachteil besteht aber darin, dass der Zieldruck $p_{Ziel}$ ausschließlich dadurch bestimmt wird, zu welchem Zeitpunkt das HSV 3 angesteuert und geschlossen wird. Diese Zeitpunkte sind i. d. R Erfahrungswerte, die empirisch ermittelt wurden. Im realen Bremssystem sind jedoch die Förderleistung der Pumpe und vor allem die Elastizität der Radbremse während ihrer Lebensdauer erheblichen Schwankungen unterworfen. Dieselbe Förderdauer der Hydraulikpumpe 4 wird daher je nach Zustand der Bremsanlage zu unterschiedlichen Zieldrücken $p_{Ziel}$ führen.

Der zeitliche Verlauf des Druckaufbaus in der Radbremse lässt sich näherungsweise wiedergeben durch

$$\frac{dp}{dt} = \frac{1}{E_B} \frac{U_{Rfp}}{2\pi k} V_{Rfp} = \frac{1}{E_B} n V_{Rfp} \, ,$$

wobei $E_B$ die Elastizität der Radbremse beschreibt und k ein Pumpenparameter ist, der den Zusammenhang zwischen einer Pumpenspannung $U_{Rfp}$ und der Pumpendrehzahl $n = U_{Rfp} / 2\pi k$ darstellt. Der Wert der Elastizität $E_B$ ist fertigungs- und alterungsbedingten Einflüssen unterworfen und kann daher sehr stark variieren; dies hat einen wesentlichen Einfluss auf den Druckaufbau. Die Streuungen der Motorkonstante k beeinflussen ebenfalls die Qualität des Druckaufbaus. $V_{Rfp}$ ist das von der Pumpe während einer Umdrehung geförderte Volumen. Da die zeitliche Dauer T des Druckaufbaus durch die Zeitdauer der Öffnung von HSV 3 vorgegeben ist, wird somit der tatsächlich erreichte Maximal-Druck $p_{Max}$ in der Radbremse

$$p_{Max} = \int_0^T \frac{1}{E_B} \frac{U_{Rfp}}{2\pi k} V_{Rfp} dt$$

in hohem Maße abhängig von den variablen Größen. Somit ist auch die mögliche Abweichung vom angestrebten Zieldruck $p_{Ziel}$ erheblich.

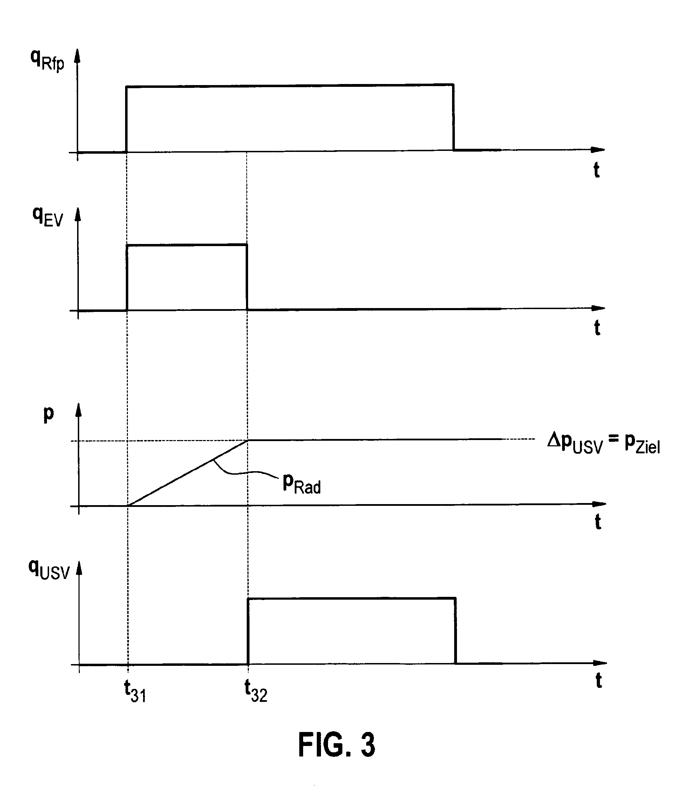

Im zweiten bekannten Verfahren wird das USV 2 zur präzisen Einstellung des Zieldrucks $p_{Ziel}$ genutzt Fig. 3 zeigt den schematischen Verlauf der Volumenströme $q_{Rfp}$, $q_{USV}$, $q_{EV}$ an der Hydraulikpumpe 4 und den Ventilen USV 2, EV 3, sowie den Druckverlauf $p_{Rad}$ in der Radbremse. Zum Zeitpunkt $t_{31}$ wird das HSV 3 geöffnet und die Hydraulikpumpe 4 eingeschaltet. Es folgt auch hier zunächst ein linearer Druckaufbau, dessen Verlauf im Wesentlichen durch die Pumpendrehzahl n bestimmt ist. Die Stromstärke I am USV 2 ist so eingestellt, dass das Ventil 2 überströmt wird, sobald an ihm ein Differenzdruck $\Delta p$ anliegt, der gleich dem geforderten Zieldruck $p_{Ziel}$ ist. Dieser ist im Zeitpunkt $t_{32}$ erreicht, so dass das USV 3 öffnet. Der Volumenstrom $q_{EV}$ am EV 5 wird dann zu Null.

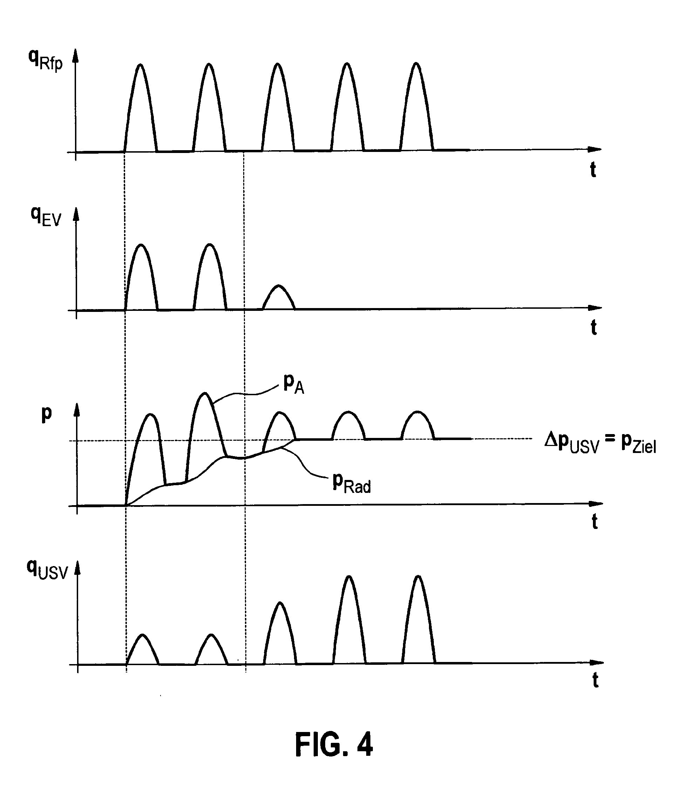

Mit Hilfe des USV 2 kann ein angeforderter Zieldruck genau eingestellt werden. Die Genauigkeit der Druckeinstellung wird jedoch in diesem Fall durch einen Verlust an Dynamik erkauft. Dieser Nachteil ist darauf zurückzuführen, dass der von der Pumpe 4 kommende Volumenstrom $q_{Rfp}$ nicht gleichförmig ist, sondern pulsiert, wie in Fig. 4 dargestellt ist.

Die Hydraulikpumpe ist i. d. R. eine Pumpe mit einer ungleichmäßigen Fördercharakteristik, zum Beispiel eine 1-Kolben-Pumpe. Beim Betrieb einer solchen Pumpe wechseln sich Ansaugphasen C und Ausstoßphasen B periodisch ab. Der von der Pumpe während einer vollständigen Umdrehung geförderte Volumenstrom schwankt dabei zwischen Null und einem Maximum. In Folge entsteht durch den periodisch auftretenden Rückstau der Bremsflüssigkeit am EV 5 ein ebenso periodisch schwankender Staudruck $p_A$ im Teilkreislauf A (Fig. 1). Wenn der Druck im Teilkreislauf A höher ist als der am USV 2 eingestellte Druck-Schwellenwert ($p_{Ziel}$) wird das USV 2 überströmt, so dass ein Teil der Bremsflüssigkeit über das USV abfließt. Dieser Teil steht somit für den Druckaufbau nicht mehr zur Verfügung und der Druckaufbau an der Radbremse 6 verlangsamt sich entsprechend.

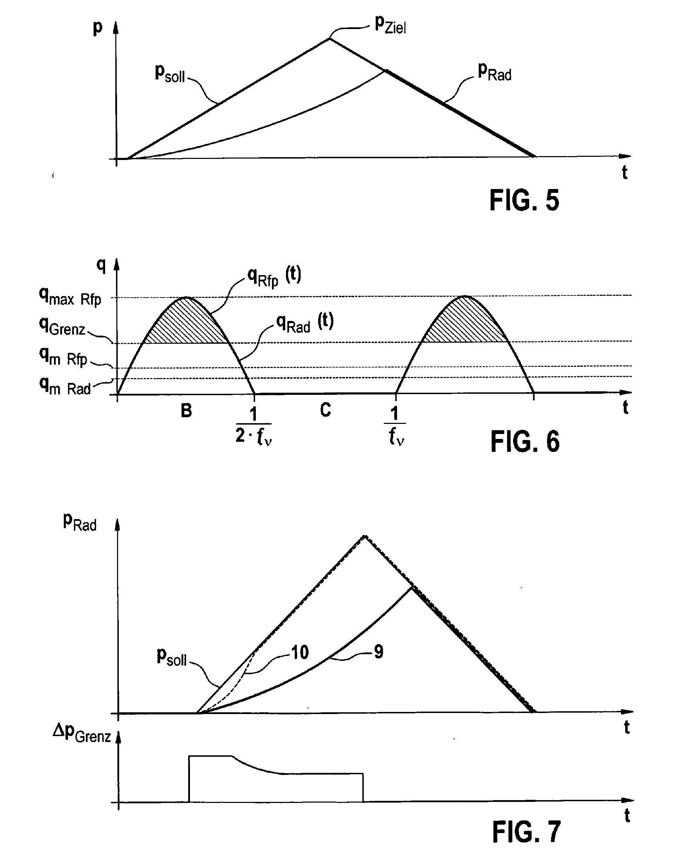

Fig. 5 zeigt den zeitlichen Verlauf eines typischen Druckaufbaus in der Radbremse 6. Der vom Regler 8 vorgegebene Solldruck ist dabei mit $p_{Soll}$ bezeichnet. In der Abbildung steigt der Solldruck linear an, bis ein Zieldruck $p_{Ziel}$ erreicht ist. Der an der Radbremse 5 wirkende Druck ist mit $p_{Rad}$ bezeichnet. Wie zu erkennen ist, steigt der Druck $p_{Rad}$ wegen des Volumenverlusts über das USV 2 langsamer an und erreicht unter Umständen auch den geforderte Zieldruck nicht. Letzteres kann dann der Fall sein, wenn, wie in Fig. 5 dargestellt, der Bremsvorgang sehr kurz ist und der Druck in den Radbremsen 6 frühzeitig wieder abgebaut wird.

Aus der EP 2 008 896 A2 ist ein Verfahren zum Durchführen einer automatischen Bremsung mit Hilfe einer Pumpe bekannt, die in einem Bremskreis Bremsdruck aufbaut, wobei der im Bremskreis herrschende Bremsdruck mittels eines Ventils begrenzt wird, das bei Erreichen eines einstellbaren Druck-Schwellenwerts überströmt wird und somit den Bremsdruck begrenzt. Es wird vorgeschlagen, in einer Druckaufbauphase, wenn die Drehzahl der Hydraulikpumpe kleiner ist als eine vorgegebene Soll-Drehzahl ($n_{ist}<n_{soll}$), den Druck-Schwellenwert am Ventil auf einen höheren Wert als den Soll-Bremsdruck einzustellen. Dadurch fließt weniger bzw. gar keine Bremsflüssigkeit durch das Ventil in Richtung des Hauptbremszylinders. Ist dagegen die Drehzahl der Hydraulikpumpe größer als die vorgegebene Soll-Drehzahl ($n_{ist}>n_{soll}$), wird der Druck-Schwellenwert am Ventil nicht erhöht, sondern auf den Soll-Bremsdruck eingestellt. In diesem Fall wird das Ventil relativ stark überströmt.

Die DE 102 38 217 A1 offenbart ebenfalls ein Verfahren zum Durchführen einer automatischen Bremsung bei einem Kraftfahrzeug mit Hilfe einer Pumpe, die in einem Bremskreis Bremsdruck aufbaut, wobei der im Bremskreis herrschende Bremsdruck mittels eines Ventils begrenzt wird, das bei Erreichen eines einstellbaren Druck-Schwellenwerts überströmt wird und somit den Bremsdruck begrenzt. Am Ventil wird ebenfalls ein Druck-Schwellenwert eingestellt, der größer ist als ein vorgegebener Soll-Bremsdruck. Der Druck-Schwellenwert wird jedoch rein in Abhängigkeit vom Druckaufbaugradienten erhöht.

Offenbarung der Erfindung

Es ist daher die Aufgabe der vorliegenden Erfindung, sowohl eine hohe Dynamik des Druck-aufbaus als auch eine hohe Genauigkeit bei der Einstellung des Zieldrucks zu erreichen. Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, den Druck-Schwellenwert an einem Ventil, insbesondere dem USV, während der Druckaufbauphase höher einzustellen als ein vom Regler vorgegebener Solldruck. Der am Ventil eingestellte Druck-Schwellenwert ist dabei kleiner, als die durch die Pumpe erzeugten Druck-Spitzen. Auf diese Weise fließt zumindest ein Teil der Bremsflüssigkeit über das Ventil in Richtung Hauptbremszylinder bzw. eines Fluid-Reservoirs ab. Dadurch verbessert sich einerseits die Dynamik des Druckaufbaus, andererseits kann die Drehzahl der Pumpe vom Regler höher eingestellt werden, als das für den Druckaufbau erforderliche Minimum, wodurch die Druck-Stellgenauigkeit steigt. Gemäß der Erfindung wird außerdem vorgeschlagen, den Druck-Schwellenwert als Funktion eines mittleren Volumenstroms zu berechnen. Der mittlere Volumenstrom ist dabei derjenige Volumenstrom, der in Richtung der Radbremse fließen muss, damit der dort herrschende Bremsdruck im Wesentlichen dem gewünschten Solldruckverlauf entspricht. Der am Ventil einzustellende Druck-Schwellenwert ist in diesem Fall eine Funktion des mittleren Volumenstroms und ggf. weiterer Größen, die das Verhalten der Bremse beschreiben, z. B.

der Drosseleigenschaften des Einlassventils der Radbremse.

Der Druck-Schwellenwert wird vorzugsweise derart eingestellt, dass der an der Radbremse wirkende Bremsdruck im zeitlichen Verlauf dem gewünschten Solldruck entspricht. In diesem Fall zeigt die Bremswirkung der Radbremse genau den vom Regler gewünschten Verlauf.

Der Druck-Schwellenwert wird während der Druckaufbauphase vorzugsweise regelmäßig neu ermittelt. Sobald ein gewünschter maximaler Zieldruck erreicht ist, wird der Druck-Schwellenwert auf diesen Wert gesetzt. Dadurch ist sichergestellt, dass der Druck in den Radbremsen auf diesem Wert gehalten wird.

Der Druck-Schwellenwert kann z. B. modellbasiert berechnet oder aus einem Kennlinienfeld ausgelesen werden.

Alternativ wird vorgeschlagen, die Druck-Erhöhung aus einem Kennlinien-Feld auszulesen. Dieses Verfahren kann auch dann eingesetzt werden, wenn die erforderlichen Parameter nicht oder nicht hinreichend genau bekannt sind.

Das vorgeschlagene Kennlinien-Feld kann z. B. den Druck-Schwellenwert in Abhängigkeit von einem mittleren Volumenstrom in Richtung Radbremse oder einem Gradienten des Solldrucks darstellen.

Die Erfindung wird nachstehend anhand der beigefügten Zeichnungen beispielhaft näher erläutert. Es zeigen:

Fig. 1 einen Teil eines aus dem Stand der Technik bekannten hydraulischen Bremssystems, das für eine Fahrdynamikregelung ausgelegt ist;

Fig. 2 den Verlauf der Volumenströme an verschiedenen Ventilen, und den Druck an der Radbremse für das Verfahren der Saugregelung;

Fig. 3 den Verlauf der Volumenströme an verschiedenen Ventilen, und den Druck an der Radbremse bei einem Regelverfahren, bei dem das USV als Überdruckventil wirkt;

Fig. 4 den Verlauf der Volumenströme an verschiedenen Ventilen, und den Druck an der Radbremse unter Berücksichtigung der Fördercharakteristik einer 1-Kolben-Pumpe;

Fig. 5 den zeitlichen Verlauf eines Druckaufbaus an der Radbremse bei einem Regelverfahren, bei dem das USV als Überdruckventil wirkt;

Fig. 6 die Volumenströme und die daraus abgeleiteten Druck-Schwellwerte gemäß einer Ausführungsform der Erfindung;

Fig. 7 den Vergleich des Druckverlaufs in einer Radbremse mit und ohne erfindungsgemäße Erhöhung des Druck-Schwellenwerts.

Bezüglich der Erläuterung der Fig. 1 bis Fig. 5 wird auf die Beschreibungseinleitung verwiesen.

Fig. 6 zeigt einen schematischen Verlauf der zeitlich veränderlichen Volumenströme $q_{Rfp}(t)$ an der Hydraulikpumpe 4 und $q_{Rad}(t)$ durch das Einlassventil 5 zu den Radbremsen 6.

Während der Ausstoßphase B der Pumpe verläuft $q_{Rfp}(t)$ in Form einer Sinus-Halbwelle mit einer der Drehzahl entsprechenden Frequenz $f_0$. Während der Ansaugphase C ist $q_{Rfp}(t)$ gleich Null. Aus den Eigenschaften der Pumpe und der aktuellen Drehzahl kann der mittlere Volumenstrom der Hydraulikpumpe $q_{m-Rfp}$ im Steuergerät 7 ermittelt werden. Das Maximum $q_{max\_Rfp}$ des Volumenstroms an der Pumpe 4 lässt sich daraus mit $q_{max\_Rfp} = \pi \cdot q_{m\_Rfp}$ bestimmen. Damit ist auch die Amplitude des Verlaufs bekannt.

Um den Druck in den Radbremsen 6 mit der vom Regler 8 angeforderten Dynamik aufzubauen, muss ein bestimmter mittlerer Volumenstrom $q_{m\_Rad}$ über das Einlassventil 5 in die Radbremsen 6 fließen. Da in jeder Ausstoßphase B der Hydraulikpumpe 4 ein Teil des Fluids über das USV 2 in Richtung des Hauptbremszylinders 1 abströmt, ist $q_{m\_Rad}$ kleiner als der von der Pumpe 4 erzeugte mittlere Volumenstrom $q_{m\_Rfp}$. Der abströmende Teil des Fluids ist in der Fig. 6 schraffiert dargestellt. Der übrige Teil (unterhalb von $q_{Grenz}$) fließt in die Radbremse 6.

Der mittlere Volumenstrom zu den Radbremsen ergibt sich aus dem Zusammenhang

$$q_{m\_Rad} = f_0 \int_0^{1/f_0} \min(q_{Grenz}, q_{Rfp}(t))dt \quad .$$

Daraus kann der Schwellenwert $q_{Gerenz}$ ermittelt werden, der eine Funktion von $q_{m\_Rad}$ und $q_{m\_Rfp}$ ist, die beide bekannt sind.

Aus den Ventil-Eigenschaften: Drosselbeiwert $\alpha$ und Drosseldurchmesser d und der Dichte $\rho$ der Bremsflüssigkeit erhält man mit $C = (\alpha \pi d^2 / 4)\sqrt{2/\rho}$ den am USV 2 einzustellenden Druck-Schwellenwert $\Delta p_{Grenz}$

$$\Delta p_{Grenz} = \frac{q_{Grenz}^2}{C^2} \quad .$$

Dieser Druck-Schwellenwert entspricht wiederum einer bestimmten Stromstärke I am USV 2. Wird diese Stromstärke eingestellt, folgt der Druckaufbau an der Radbremse im Wesentlichen der Sollvorgabe. Das übrige Fluid, das in Fig. 6 schraffiert dargestellt ist, strömt über das USV 2 ab.

Während der Druckaufbauphase vermindert sich der mittlere Volumenstrom $p_{m-Rad}$ zur Radbremse, der für die Zunahme des Bremsdrucks um einen bestimmten Wert erforderlich ist. Damit geht eine entsprechende Verschiebung des Schwellenwerts $q_{Grenz}$ und des Druck-Schwellenwerts $\Delta p_{Grenz}$ zu kleineren Werten einher. Letzterer wird daher in regelmäßigen Abständen, z. B. alle 5 ms neu bestimmt und das USV 2 entsprechend angesteuert.

Fig. 7 zeigt einen typischen Verlauf des vom Regler 8 ausgegebenen Solldrucks $p_{soll}$ und den tatsächlichen Druck an der Radbremse mit und ohne die erfindungsgemäße Druckkorrektur (Kennlinien 10 bzw. 9). Darunter ist der zugehörige Verlauf des Druck-Schwellenwerts $\Delta p_{Grenz}$ dargestellt.

Aus der Fig. 7 ist deutlich zu erkennen, dass mit Hilfe des Verfahrens der tatsächliche Druck $p_{Rad}$ in den Radbremsen dem Solldruck $p_{soll}$ gut angeglichen werden kann.

**Patentansprüche**

1. Verfahren zum Durchführen einer automatischen Bremsung bei einem Kraftfahrzeug mit Hilfe einer Pumpe, die in einem Bremskreis Bremsdruck aufbaut, wobei der im Bremskreis herrschende Bremsdruck mittels eines Ventils (USV) begrenzt wird, das bei Erreichen eines einstellbaren Druck-Schwellenwerts überströmt wird und somit den Bremsdruck begrenzt, **dadurch gekennzeichnet, dass** während einer Phase, in der Bremsdruck aufgebaut wird, am Ventil (USV) ein Druck-Schwellenwert eingestellt wird, der größer ist als ein vorgegebener Soll-Bremsdruck, aber kleiner ist als die von der Pumpe erzeugten Druckspitzen, so dass zumindest ein Teil des von der Pumpe geförderten Fluids über das Ventil entweichen kann, und dass der Druck-Schwellenwert als Funktion eines mittleren Volumenstroms berechnet wird, der in Richtung der Radbremsen gefördert werden muss, damit der im Bremskreis tatsächlich herrschende Druck im Wesentlichen dem Solldruck entspricht.

2. Verfahren nach Anspruch 1, **dadurch gekennzeichnet, dass** der Druck-Schwellenwert so eingestellt wird, dass der zeitliche Verlauf des Bremsdrucks im Bremskreis im Wesentlichen einem vorgegebenen SolldruckVerlauf entspricht.

3. Verfahren nach einem der vorhergehenden Ansprüche, **dadurch gekennzeichnet, dass** der am Ventil (USV) einzustellende Druck-Schwellenwert während einer Druckaufbauphase regelmäßig neu ermittelt wird.

4. Verfahren nach einem der vorhergehenden Ansprüche, **dadurch gekennzeichnet, dass** der Druck-Schwellenwert mit Erreichen eines gewünschten Zieldrucks auf den Wert des Zieldrucks gesetzt wird.

5. Verfahren nach einem der vorhergehenden Ansprüche, **dadurch gekennzeichnet, dass** eine Druckerhöhung ($\Delta p$) ermittelt wird, um die der am Ventil (USV) eingestellte Druck-Schwellenwert den gewünschten Solldruck übersteigt.

6. Verfahren nach Anspruch 5, **dadurch gekennzeichnet, dass** die erforderliche Druckerhöhung aus einem Kennlinienfeld ausgelesen wird.

7. Verfahren nach Anspruch 6, **dadurch gekennzeichnet, dass** das Kennlinien-feld eine Druckerhöhung ($\Delta p$) in Abhängigkeit von einem mittlerem Volumenstrom darstellt, der in Richtung der Radbremsen gefördert werden muss, damit der im Bremskreis tatsächlich herrschende Druck im Wesentlichen dem Solldruck entspricht.

8. Steuergerät, umfassend Mittel zum Ansteuern eines Ventils gemäß einem der vorstehend genannten Verfahren.

**Claims**

1. Method for performing an automatic braking operation in a motor vehicle with the aid of a pump which builds up brake pressure in a brake circuit, wherein the brake pressure prevailing in the brake circuit is limited by means of a valve (USV) via which an overflow occurs when a settable pressure threshold value is attained and which thus limits the brake pressure, **characterized in that**, during a phase in which the brake pressure is built up, there is set at the valve (USV) a pressure threshold value which is higher than a predefined setpoint brake pressure but lower than the pressure peaks generated by the pump, such that at least a part of the fluid delivered by the pump can escape via the valve, and **in that** the pressure threshold value is calculated as a function of an average volume flow rate which must be delivered in the direction of the wheel brakes in order that the pressure actually prevailing in the brake circuit substantially corresponds to the setpoint pressure.

2. Method according to Claim 1, **characterized in that** the pressure threshold value is set such that the profile with respect to time of the brake pressure in the brake circuit substantially corresponds to a predefined setpoint pressure profile.

3. Method according to one of the preceding claims, **characterized in that** the pressure threshold value to be set at the valve (USV) is newly determined at regular intervals during a pressure build-up phase.

4. Method according to one of the preceding claims, **characterized in that**, upon the attainment of a desired target pressure, the pressure threshold value is set to the value of the target pressure.

5. Method according to one of the preceding claims, **characterized in that** a pressure increase ($\Delta$p) by which the pressure threshold value set at the valve (USV) exceeds the desired setpoint pressure is determined.

6. Method according Claim 5, **characterized in that** the required pressure increase is read out from a characteristic map.

7. Method according to Claim 6, **characterized in that** the characteristic map represents a pressure increase ($\Delta$p) as a function of an average volume flow rate which must be delivered in the direction of the wheel brakes in order that the pressure actually prevailing in the brake circuit substantially corresponds to the setpoint pressure.

8. Control unit comprising means for actuating a valve in accordance with one of the above-specified methods.

**Revendications**

1. Procédé pour effectuer un freinage automatique dans un véhicule automobile à l'aide d'une pompe qui produit dans un circuit de freinage une pression de freinage, la pression de freinage régnant dans le circuit de freinage étant limitée au moyen d'une soupape (USV), laquelle soupape, lorsqu'une valeur seuil de pression ajustable est atteinte, est franchie par l'écoulement et limite donc la pression de freinage, **caractérisé en ce que** pendant une phase de production de la pression de freinage, une valeur seuil de pression est ajustée au niveau de la soupape (USV), laquelle est supérieure à une pression de freinage de consigne prédéfinie mais est inférieure aux pointes de pression produites par la pompe, de telle sorte qu'au moins une partie du fluide refoulé par la pompe puisse s'échapper par la soupape, et **en ce que** la valeur seuil de pression est calculée en fonction d'un débit volumique moyen qui doit être refoulé dans la direction des freins de roue afin que la pression régnant effectivement dans le circuit de freinage corresponde essentiellement à la pression de consigne.

2. Procédé selon la revendication 1, **caractérisé en ce que** la valeur seuil de pression est ajustée de telle sorte que l'allure en fonction du temps de la pression de freinage dans le circuit de freinage corresponde essentiellement à une allure de pression de consigne prédéfinie.

3. Procédé selon l'une quelconque des revendications précédentes, **caractérisé en ce que** la valeur seuil de pression devant être ajustée au niveau de la soupape (USV) est régulièrement re-déterminée pendant une phase de production de pression.

4. Procédé selon l'une quelconque des revendications précédentes, **caractérisé en ce que** la valeur seuil de pression est mise à la valeur de la pression cible lorsqu'une pression cible souhaitée est atteinte.

5. Procédé selon l'une quelconque des revendications précédentes, **caractérisé en ce que** l'on détermine l'augmentation de pression ($\Delta$p) de laquelle la valeur seuil de pression ajustée au niveau de la soupape (USV) dépasse la pression de consigne souhaitée.

6. Procédé selon la revendication 5, **caractérisé en ce que** l'augmentation de pression requise est lue dans un champ caractéristique.

7. Procédé selon la revendication 6, **caractérisé en ce que** le champ caractéristique représente une augmentation de pression ($\Delta$p) en fonction d'un débit volumique moyen qui doit être refoulé dans la direction des freins de roue afin que la pression régnant effectivement dans le circuit de freinage corresponde essentiellement à la pression de consigne.

8. Appareil de commande comprenant des moyens pour commander une soupape selon un procédé tel que cité ci-dessus.

**FIG. 1**

FIG. 2

**FIG. 3**

$q_{Rfp}$

$t$

$q_{EV}$

$t$

$p_A$

$p$

$p_{Rad}$

$\Delta p_{USV} = p_{Ziel}$

$t$

$q_{USV}$

$t$

# FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2008896 A2
- DE 10238217 A1